Europäisches Patentamt

European Patent Office

Office européen des brevets

(11) Veröffentlichungsnummer: **0 395 586**
**A1**

## (12) EUROPÄISCHE PATENTANMELDUNG

(21) Anmeldenummer: **90810312.0**

(22) Anmeldetag: **19.04.90**

(51) Int. Cl.⁵: **B62D 47/02, B60K 5/02**

(30) Priorität: **25.04.89 CH 1571/89**

(43) Veröffentlichungstag der Anmeldung:
**31.10.90 Patentblatt 90/44**

(84) Benannte Vertragsstaaten:
**CH DE FR GB LI SE**

(71) Anmelder: **ALUSUISSE-LONZA SERVICES AG**
**Feldeggstrasse 4**
**CH-8034 Zürich(CH)**

(72) Erfinder: **Faisst, Dieter**
**Forchstrasse 8**
**CH-8400 Winterthur(DE)**
Erfinder: **Waldeck, Klaus-Dieter**
**Sonnenbergstrasse 18**
**CH-8102 Oberengstringen(DE)**

(54) **Landfahrzeug.**

(57) Ein Landfahrzeug, insbesondere für den Personentransport, weist einen tiefgelegenen Boden (2) im einheitlichen, niedrigen Niveau über die gesamte Fahrzeuglänge auf. Der Antrieb (12) ist in einem Raum (20) oberhalb mindestens eines Rades/Radpaares (6) des Busses (1) untergebracht.

Fig. 1

EP 0 395 586 A1

## Landfahrzeug

Die Erfindung betrifft ein Landfahrzeug, insbesondere für den Personentransport, mit einem Antrieb und einem Boden. Ueblichе Busse weisen einen Boden mit verschiedenen Niveauhöhen auf, der schlecht zu nutzen und darüber hinaus auch schwer, d.h. oft über mehrere Stufen, zugänglich ist. Der Bereich über den hohen Radkästen ist nur schlecht nutzbar für meist sehr unbequeme Sitze oder gar nur für Gepäck. Ein erheblicher Teil der nutzbaren Bodenfläche geht zur Unterbringung des Antriebs verloren, welcher sich meist am Fahrzeug hinten quer oder separat befindet (DE-PS 857 893).

Der Erfindung liegt die Aufgabe zugrunde, ein Fahrzeug der angegebenen Art so auszubilden, dass die Bodenfläche unter Vermeidung unterschiedlicher Niveauhöhen bequem zugänglich, begehbar und optimal ausnutzbar ist, wobei gleichzeitig eine wirtschaftlich kostengünstige Bauweise angestrebt ist.

Zur Lösung dieser Aufgabe ist erfindungsgemäss bei einem Fahrzeug der angegebenen Art vorgesehen, dass der Boden über die gesamte Fahrzeuglänge ein einheitliches, niedriges Niveau über der Strasse aufweist, und dass der Antrieb im Raum oberhalb mindestens eines Rades/Radpaares des Fahrzeugs untergebracht ist.

Besonders vorteilhaft ist es, wenn der Raum oberhalb mindestens eines Hinterrades/Hinterradpaares (bei Zwillingsbereifung) angeordnet ist. Die Räume oberhalb der beiseitigen Hinterräder/Hinterradpaare können sowohl zur Unterbringung des Antriebs als auch zur Unterbringung von Nebenaggregaten, wie Druckluftbehälter, Tanks, Batterie, genutzt werden.

Bei Einsatz von zwei Motoren lässt sich das Fahrzeug besonders wirtschaftlich betreiben, weil dann jeweils ein Motor bei geringem Leistungsbedarf abgeschaltet werden kann. In diesem Fall ist vorteilhaft in den Räumen oberhalb der beidseitigen Hinterräder/Hinterradpaare je ein Antrieb untergebracht.

Durch die Anordnung des Antriebs bzw. der Antriebe oberhalb der Hinterräder wird ein extrem kurzer Kraftübertragungsweg zu den angetriebenen Hinterrädern erzielt.

Zu einer weiteren vorteilhaften Ausbildung ist der bzw. jeder Raum von einer Verkleidung umgeben. Diese Verkleidung hat insbesondere dann, wenn sie bis zum Dach des Fahrzeugs reicht, eine Erhöhung der Quersteifigkeit und damit der Ueberrollsicherheit zur Folge, wodurch sich zusätzlicher Versteifungsaufwand zum Erreichen der gesetzlichen Sicherheitsvorschriften erübrigt oder vermindert.

Das Niveau des Bodens ist zweckmässigerweise so bemessen, dass ein bequemes, stufenloses Einsteigen ermöglicht ist. Damit ergeben sich Vorteile für die Benutzer, insbesondere für alte und behinderte Personen, sowie ein verbesserter Fahrgastfluss bei Einsatz des Fahrzeuges im öffentlichen Verkehr.

Ein zusätzlicher Vorteil der Anordnung des Antriebes der Nebenaggregate über den angetriebenen Hinterrädern ergibt sich dadurch, dass die Haftung der Hinterräder auf der Strasse verbessert und damit ein sicheres Fahrverhalten erzielt wird. Hierzu trägt auch die bei dem erfindungsgemässen Fahrzeug insgesamt erzielte Schwerpunktherabsetzung des beladenen Fahrzeuges bei.

Generell kann die Konstruktion mit konventionellen Bauteilen in konventioneller Bauweise ausgeführt werden. Dabei ist die Bauweise des Strukturgerippes des Fahrzeuges frei wählbar. Ferner können sämtliche üblichen Antriebe eingesetzt werden, z.B. Elektroantriebe, Diesel- oder Ottomotoren oder mit Gas betriebene Motoren. Die Kraftübertragung kann dabei hydraulisch, mechanisch oder elektrisch erfolgen.

Insgesamt wird mit der Erfindung ein Niederflurfahrzeug geschaffen, das bei wirtschaftlicher Bauweise eine optimale und bequeme Ausnutzung des auf gleichbleibendes Niveau tiefgelegten Bodens des Fahrzeuges ermöglicht.

Die Erfindung ist im folgenden anhand schematischer Zeichnungen an Ausführungsbeispielen mit weiteren Einzelheiten näher erläutert. Es zeigen:

Fig. 1 eine perspektivische Darstellung eines Fahrzeuges nach der Erfindung;

Fig. 2 und 3 einen Teilquerschnitt und einen Teillängsschnitt durch eine erste Ausführung eines Fahrzeuges nach der Erfindung und

Fig. 4 und 5 einen Teilquerschnitt und einen Teillängsschnitt durch eine zweite Ausführung eines Fahrzeuges nach der Erfindung

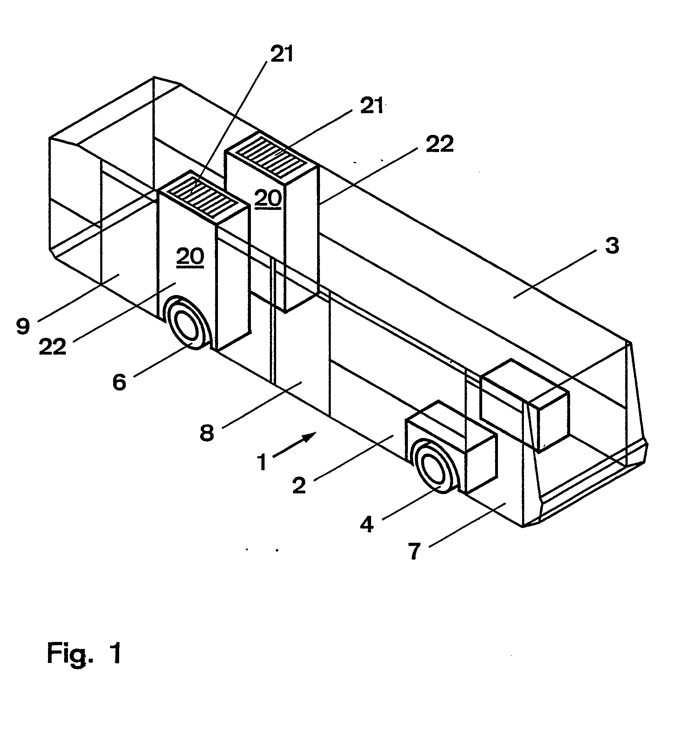

Das in Fig. 1 dargestellte Fahrzeug ist ein Niederflurbus 1 mit einem Boden 2, einem Dach 3, Vorderrädern 4 und Hinterrädern 6. Der Boden 2 hat über die gesamte Länge des Niederflurbusses 1 gleichbleibend niedriges Niveau gegenüber der Strasse. Somit ist der Boden über Türen 7,8,9 bequem ohne Ueberwindung von Stufen auch für ältere oder behinderte Personen zugänglich.

Oberhalb der Hinterräder 6 sind Räume 20 durch Verkleidungen 22 von dem Innenraum des Niederflurbusses 1 abgeteilt. Die Verkleidungen 22 erstrecken sich über die gesamte Höhe des Niederflurbusses bis zum Dach 3 und versteifen somit die Karosserie. Die von den Verkleidungen umgebenen Räume 20 sind über Entlüftungsschlitze 21 im Dach be- und entlüftet.

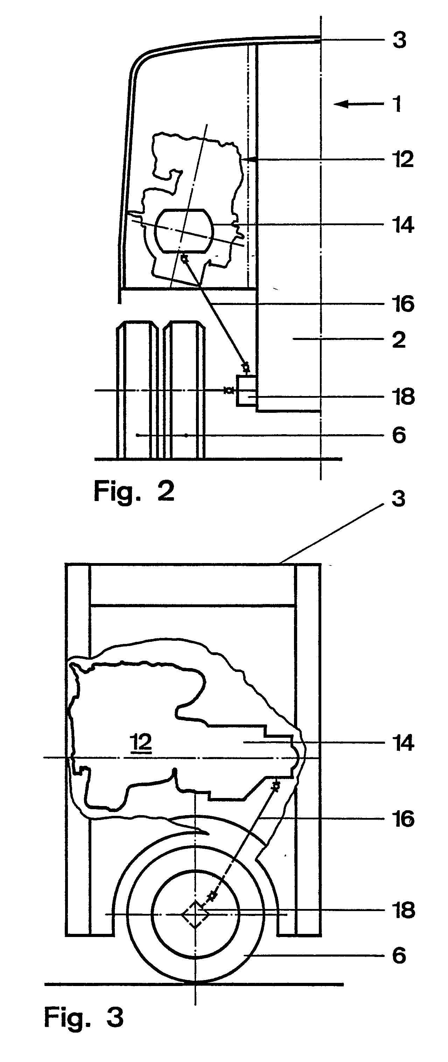

In den Fig. 2 bis 3 ist eine Ausführung der Erfindung im einzelnen gezeigt. Dabei ist mit Bezugszahl 12 ein Antriebsmotor bezeichnet, an den ein Getriebe 14 angeflanscht ist. Von dem Getriebe 14 wird die Kraft über eine kurze Kardanwelle 16 zum Achsgetriebe 18 und von dort auf die Räder 6 der betreffenden Achse übertragen.

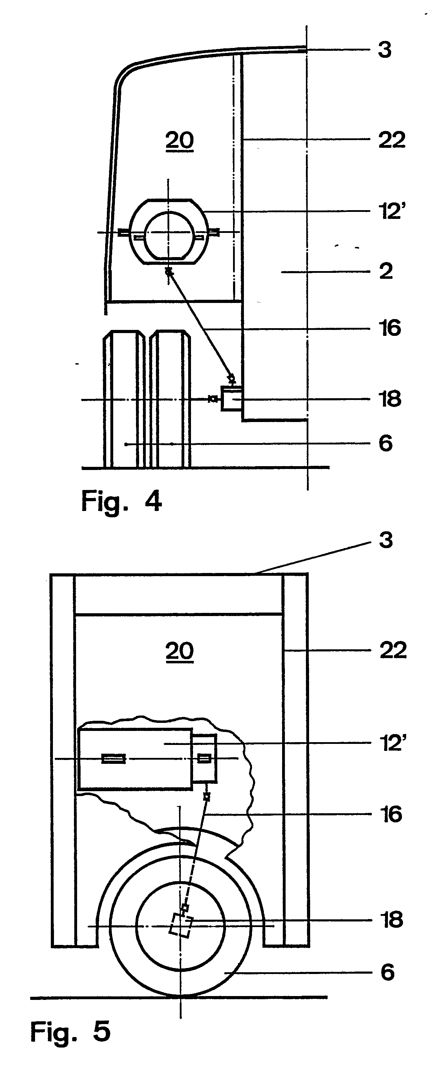

Bei der Ausführung nach den Fig. 4 und 5 sind gleiche oder gleichwirkende Teile mit gleichen Bezugszeichen bezeichnet. Unterschiedlich ist lediglich, dass das Fahrzeug in diesem Fall ein Trolleybus mit einem Elektromotor 12′ als Antrieb ist, der mit Strom in üblicher Weise über einen Fahrdraht (nicht gezeigt) versorgt wird. Insbesondere ein solcher verhältnismässig klein bauender Antrieb könnte auch (mindestens teilweise) ausserhalb des Daches 3 angeordnet sein, wenn z.B. ohnehin Aufbauten auf dem Dach vorhanden sind, wie der Stromabnehmerbügel bei einem Trolleybus, eine Klimaanlage od. dergl., um die Nutzbarkeit des Innenraumes weiter zu verbessern.

## Ansprüche

1. Landfahrzeug, insbesondere für den Personentransport, mit einem Antrieb (12) und einem Boden (2),
dadurch gekennzeichnet, dass
der Boden (2) über die gesamte Fahrzeuglänge ein einheitliches, niedriges Niveau über der Strasse aufweist, und dass der Antrieb (12) im Raum (20) oberhalb mindestens eines Rades/Radpaares (6) des Fahrzeuges (1) untergebracht ist.

2. Fahrzeug nach Anspruch 1, dadurch gekennzeichnet, dass der Raum (20) oberhalb mindestens eines Hinterrades/Hinterradpaares (6,6) angeordnet ist.

3. Fahrzeug nach Anspruch 1 oder 2, dadurch gekennzeichnet, dass die Räume (20,20) oberhalb der beidseitigen Hinterräder/Hinterradpaare (6,6) zur Unterbringung von Antrieb (12) und Nebenaggregaten (14) genutzt sind.

4. Fahrzeug nach Anspruch 1 oder 2, dadurch gekennzeichnet, dass in den Räumen (20,20) oberhalb der beidseitigen Hinterräder/Hinterradpaare (6,6) je ein Antrieb (12) untergebracht ist.

5. Fahrzeug nach einem der Ansprüche 1 bis 4, dadurch gekennzeichnet, dass der bzw. jeder Raum (20) von einer Verkleidung (22) umgeben ist.

6. Fahrzeug nach Anspruch 5, dadurch gekennzeichnet, dass die Verkleidung (22) bis zum Dach (3) des Fahrzeuges (1) reicht.

7. Fahrzeug nach einem der Ansprüche 1 bis 7, dadurch gekennzeichnet, dass der Raum (20) über das Dach (3) be- bzw. entlüftet ist.

8. Fahrzeug nach einem der Ansprüche 1 bis 7, dadurch gekennzeichnet, dass das Niveau so bemessen ist, dass ein bequemes, stufenloses Einsteigen ermöglicht ist.

9. Fahrzeug nach einem der Ansprüche 1 bis 8, dadurch gekennzeichnet, dass es selbsttragend ist.

10. Fahrzeug nach einem der Ansprüche 1 bis 9, dadurch gekennzeichnet, dass die Räder (4,6) einzeln am Aufbau des Fahrzeuges (1) aufgehängt sind.

**Fig. 1**

Fig. 2

Fig. 3

3

20

22

12'

2

16

18

6

Fig. 4

3

20

22

12'

16

18

6

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | WO-A-8606688 (B. BOTAR) <br> * Seite 6, Zeile 2 - Seite 7, Zeile 27; Figuren 1, 2 * | 1 | B62D47/02 <br> B60K5/02 |
| | --- | | |
| Y | US-A-4425978 (L. D. STAR) <br> * Spalte 3, Zeile 51 - Spalte 4, Zeile 55; Figuren 2, 3 * | 1 | |
| | --- | | |
| A | DE-A-2611993 (MAGIRUS - DEUTZ AG) <br> * Seiten 7 - 8; Figur 1 * | 1, 8 | |
| | --- | | |
| A | EP-A-0110043 (KARL KAESSBOHRER FAHRZEUGWERKE GMBH) <br> * Seite 5, Zeile 29 - Seite 6, Zeile 20; Figuren 1, 2 * | 1, 8 | |
| | --- | | |
| A | CH-A-353262 (AG ADOLPH SAURER) <br> * Anspruch 1; Figuren * | 9 | |
| | --- | | |
| A | GB-A-567976 (R. LUCIEN) <br> * Seite 5, Zeile 44 - Seite 6, Zeile 34; Figuren 6-9 * | 10 | RECHERCHIERTE SACHGEBIETE (Int. Cl.5 ) <br><br> B62D <br> B60K |
| | ----- | | |

Der vorliegende Recherchenbericht wurde für alle Patentansprüche erstellt

| Recherchenort | Abschlußdatum der Recherche | Prüfer |
|---|---|---|
| DEN HAAG | 12 JULI 1990 | CHLOSTA P. |